## Europäisches Patentamt

## European Patent Office

## Office européen des brevets

⑩

(11) Publication number: **0 042 018**
**B1**

(12) **EUROPEAN PATENT SPECIFICATION**

(45) Date of publication of patent specification: **10.04.85**

(21) Application number: **80200575.1**

(22) Date of filing: **16.06.80**

(51) Int. Cl.⁴: **F 16 B 19/08**

(54) Method of joining parts with semi-tubular rivets.

(43) Date of publication of application:
**23.12.81 Bulletin 81/51**

(45) Publication of the grant of the patent:
**10.04.85 Bulletin 85/15**

(84) Designated Contracting States:
**AT BE DE FR GB IT NL SE**

(56) References cited:
**DE-A-2 446 888**
**DE-B-1 450 977**
**DE-C- 302 110**
**DE-U-1 854 640**
**FR-A- 807 626**
**US-A-1 503 859**
**US-A-2 302 501**
**US-A-3 505 923**

**Industrial Fasteners Handbook , 2nd Edition, P. 409**

(73) Proprietor: **The Boeing Company**
**P.O. Box 3707**
**Seattle Washington 98124 (US)**

(72) Inventor: **Hufnagl, Gerhart**
**2703 N.E.88th Street**
**Seattle Washington 98115 (US)**
Inventor: **Zehnder, Clark Roy**
**10927 S.W.186th Street**
**Renton Washington 98055 (US)**

(74) Representative: **Hoijtink, Reinoud**
**OCTROOIBUREAU ARNOLD & SIEDSMA 1,**
**Sweelinckplein**
**NL-2517 GK Den Haag (NL)**

Courier Press, Leamington Spa, England.

## Description

The invention relates to a method of joining parts with semi-tubular rivets.

Assembly of fiber reinforced plastic laminates is accomplished by adhesive bonding or by joining with fasteners. In installations where fasteners are required and weight savings are a consideration it would be desirable to join the laminates with rivets instead of threaded fasteners; however, rivets create a problem as expansion of the rivet during the forming operation causes the laminate to be weakened as is evidenced by crazing in the area of the matrix around the formed rivet.

It is known from Industrial Fasteners Handbook, Trade & Technical Press Ltd., 2nd Edition, p. 409, Table I(ii) that shank expansion is minimized by the use of a semi-tubular rivet having an inside wall on the tubular open end portion which tapers outwardly.

It was found that such a semi-tubular rivet together with a special shaped die can be used to fasten together fiber reinforced plastic laminates without creating a weakness in the laminates.

The invention provides a method of joining plastic laminates so that the main shank of the rivet does not expand against the bore of the laminate. This method is characterized in Claim 1.

The semi-tubular rivet preferably used in this method has an inside wall on the tubular open end portion that tapers outwardly at about 15°.

A rivet of titanium niobium alloy, comprising about 55% titanium and about 45% niobium is found to give good results.

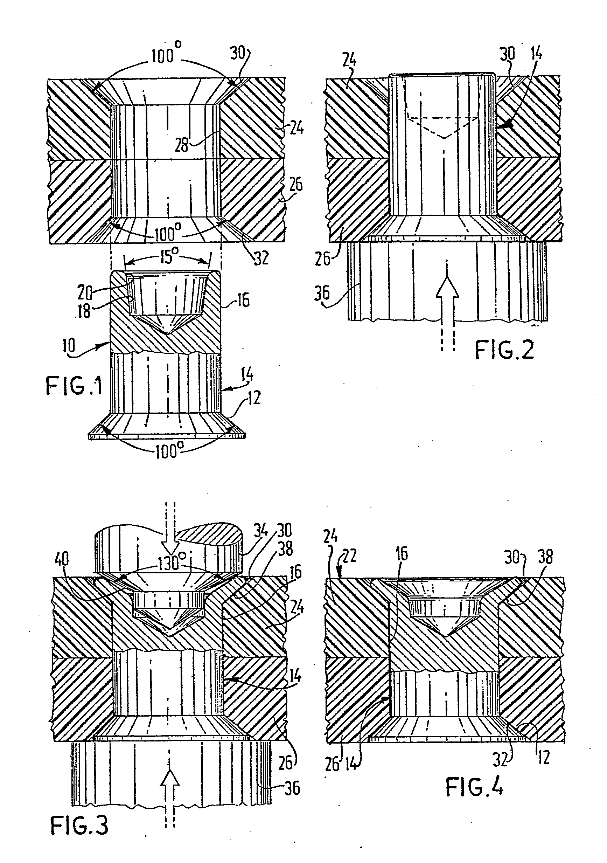

Figure 1 shows an exploded side elevational partially sectional view of the rivet used in this invention in combination with a fragmented sectional part to be joined.

Figure 2 shows the rivet and part of Figure 1 with the rivet inserted and ready to be formed.

Figure 3 shows the rivet being formed with forming dies.

Figure 4 shows the rivet joined part.

In rivet 10 the head 12 of the rivet is of the flush type and is at an angle of 100° to fit into a 100° countersink. The shank 14 is of a constant diameter and is open ended opposite the head to form a tubular end 16. The inside walls 18 of the tubular section are tapered outward at an angle of about 15° and terminate on a radius at 20. The rivets are used to join fiber reinforced laminates or fiber reinforced laminates to metals. It is imperative the rivet firmly hold the laminates without having the main part of the shank of the rivet expand during the forming process as the expanding shank sets up cracks in the laminate which causes structural failure. These rivets are made of an alloy of titanium and niobium to be compatible with laminates using graphite fibers as the reinforcement, but are not restricted to such use as the rivets are also used to join laminates of other materials. The alloy is preferably about 55% titanium and about 45% niobium. Straight walled tubular rivets and tubular rivets with inside walls tapered at 30° were completely unsatisfactory. Aluminum rivets may not be used to join laminates containing graphite as aluminum reacts chemically with the graphite.

In the figures an airplane elevator 22 is shown which is made up of a pair of laminates 24 and 26 joined with titanium niobium rivets 14. The laminates are of graphite fibers in an epoxy resin, are drilled through with bore 28 and are countersunk to 100° at each side at 30 and 32.

When joining the laminates the rivet is selected of a diameter to provide a net to a clearance fit into the bore, the rivet inserted and forming dies 34 and 36 located in a riveting machine not shown, are advanced to form a button 38 on tubular end 16 with the button pressing against the countersink 30. In forming the button the forming die uses contacting surface 40 that is at an angle of about 130° instead of a conventional angle for a die, which would be at about the same angle as the countersink. Preferably the depth of the tubular section of the shank is greater than the depth of the countersink against which the button is formed.

These figures show a flush head rivet; however, it is not intended to limit the rivet to a flush head as other types of manufactured heads may be used as long as the opposite end of the rivet is tubular as shown.

## Claims

1. A method of joining parts (24, 26) at least one of which is a fiber reinforced plastic laminate comprising the steps of drilling a hole (28) through the parts to be joined, countersinking the parts on at least one side (30, 32) selecting a semi-tubular rivet (10) having a head (12) and having an inside wall (18) on the tubular open end portion that tapers outwardly, inserting the rivet with a net to a clearance fit in the hole in the parts, insuring that the open end (16) of the tubular rivet is on the countersink side, placing a die (34) on the open end, and squeezing the rivet at a pressure sufficient to set the rivet by forming the open end of the rivet against the countersink, characterized by selecting a die (34) being tapered at an angle greater than the angle of the countersink.

2. A method according to Claim 1, characterized by cutting the countersink at an angle of 100° and using an angle of about 130° on the rivet forming die.

3. A method according to Claim 2, characterized by selecting a semi-tubular rivet having an inside wall on the tubular open end portion that tapers outwardly at about 15 degrees.

4. A method according to Claims 1 to 3, characterized by selecting a rivet comprising about 55% titanium and about 45% niobium.

## Patentansprüche

1. Verfahren zum Verbinden von Teilen (24, 26), von denen wenigstens eines ein faserverstärktes Kunststofflaminat ist, umfassend die Verfahrensschritte des Bohrens eines Lochs (28) durch die zu verbindenden Teile, des Versenkens der Teile auf wenigstens einer Seite (30, 32), des Auswählens eines halbrohrförmigen Niets (10), der einen Kopf (12) hat und der eine Innenwand (18) im rohrförmigen offenen Endteil hat, die nach außen abgeschrägt verläuft, des Einfügens des Niets mit einem Paß- bis einem Bewegungssitz in das Loch in die Teile, des Sicherstellens, daß das offene Ende (16) des rohrförmigen Niets auf der Seite der Versenkung ist, des Anordnens eines Stempels (34) auf dem offenen Ende, und des Quetschens des Niets mit einem Druck, der ausreicht, den Niet durch Formen des offenen Endes des Niets gegen die Versenkung festzulegen, gekennzeichnet durch Auswählen eines Stempels (34), der sich unter einem Winkel verjüngt, welcher größer als der Winkel der Versenkung ist.

2. Verfahren nach Anspruch 1, dadurch gekennzeichnet, daß die Versenkung unter einem Winkel von 100° geschnitten wird, und daß ein Winkel von ungefähr 130° auf dem den Niet formenden Stempel benutzt wird.

3. Verfahren nach Anspruch 2, dadurch gekennzeichnet, daß ein halbrohrförmiger Niet ausgewählt wird, der eine Innenwand in dem rohrförmigen offenen Endteil hat, die nach auswärts um etwa 15° abgeschrägt verläuft.

4. Verfahren nach den Ansprüchen 1 bis 3, dadurch gekennzeichnet, daß ein Niet ausgewählt wird, der etwa 55% Titan und etwa 45% Niob enthält.

## Revendications

1. Procédé pour assembler des pièces (24, 26), dont l'une au moins est une pièce plate en plastique armé de fibres, comprenant le perçage d'un trou (28) à travers les pièces à assembler, la réalisation d'un logement conique (30, 32) à la débouchure du trou sur au moins un côté des pièces, la sélection d'un rivet semi-tubulaire (10) possédant une tête (12) et une paroi interne (18), sur la portion extrême tubulaire, ouverte au bout, qui s'évase vers l'extérieur, l'insertion du rivet à ajustage glissant ou avec du jeu dans le trou des pièces, en s'assurant que l'extrémité ouverte (16) du rivet tubulaire soit située du côté où se trouve le logement conique, la disposition d'un outil (34) sur l'extrémité ouverte et la compression du rivet sous une pression suffisante pour poser le rivet en déformant l'extrémité ouverte du rivet contre le logement conique, caractérisé par l'utilisation d'un outil (34) présentant un angle de conicité qui est plus grand que l'angle du logement.

2. Procédé selon la revendication 1, caractérisé par la réalisation du logement conique avec un angle de 100° et l'utilisation d'un angle d'environ 130° sur l'outil de formage du rivet.

3. Procédé selon la revendication 2, caractérisé par l'utilisation d'un rivet semi-tubulaire dont la portion extrême tubulaire ouverte au bout possède une paroi interne qui s'évase vers l'extérieur sous un angle d'environ 15°.

4. Procédé selon les revendications 1 à 3, caractérisé par l'utilisation d'un rivet contenant environ 55% de titane et environ 45% de niobium.

FIG.1

FIG.2

FIG.3

FIG.4